# EUROPÄISCHE PATENTSCHRIFT

(11) **EP 1 080 980 B1**
(45) Veröffentlichungstag und Bekanntmachung des Hinweises auf die Patenterteilung: **10.05.2006**
(21) Anmeldenummer: 00115047.3
(22) Anmeldetag: 26.07.2000
(51) Int. Cl.: F16H 59/02, B60T 7/10

(54) **Gangwahlhebel mit integrierter Betätigungsvorrichtung für eine Handbremse**
Gear shift lever with integral handbrake actuator
Levier de commande d'une boîte de vitesses avec mécanisme de frein à main intégré

(30) Priorität: 28.08.1999 DE 19941018
(43) Veröffentlichungstag der Anmeldung: 07.03.2001
(73) Patentinhaber: Volkswagen Aktiengesellschaft, 38436 Wolfsburg (DE)
(72) Erfinder: van Gerpen, Dieter, Dipl.-Ing., 38154 Königslutter (DE); Fähland, Jörg, Dipl.-Ing., 38524 Sassenburg (DE)

(56) Entgegenhaltungen:
- EP-A- 0 314 611
- EP-A- 0 978 671
- DE-A- 19 850 374

## Beschreibung

Die vorliegende Erfindung betrifft einen Gangwahlhebel mit integrierter Betätigungsvorrichtung für eine Handbremse.

Die bei Kraftfahrzeugen übliche getrennte Anordnung von Handbremshebel einerseits und Gangwahlhebel andererseits ist insbesondere aus ergonomischen Gründen kritisiert worden. Im Stand der Technik sind daher Lösungen bekannt, in den Gangwahlhebel eine Betätigungsvorrichtung für die Handbremse (oder umgekehrt) zu integrieren.

In der EP 0 209 431 B1 ist beispielsweise eine kombinierte Schaltgetriebe- und Handbremssteuerung vorgeschlagen, die einen gemeinsamen Handbremshebel zur Auswahl und zum Schalten der Gänge und zum Anziehen der Handbremse aufweist. Durch Vor-, Zurück- und Seitwärtsschwenken des Hebels wird in üblicher Weise ein manuelles Schaltgetriebe betätigt. Eine mit einem zusätzlichen Handgriff steuerbare Sicherheitsanordnung gibt eine Kippbewegung des Hebels zur Betätigung der Handbremse frei.

In der DE-PS 7 29 325 ist ein Schalthebel zur Betätigung eines manuellen Schaltgetriebes vorgeschlagen, der zusätzlich mit einer Zugvorrichtung versehen ist. Die Zugvorrichtung befindet sich in dem Schalthebel und betätigt über einen Seilzug die Handbremse. Dazu ist die Zugvorrichtung axial aus dem Schalthebel herausziehbar angeordnet und der Seilzug ist in einem Übergangsbereich zwischen Schalthebel und Karosserieanbindung flexibel ausgebildet.

Die DE 196 32 254 C1 geht gegenüber dem oben genannten Stand der Technik insofern einen umgekehrten Weg, als sie die Schaltung eines Automatikgetriebes in einen üblichen Handbremshebel integriert. Zu diesem Zweck wird der Handbremshebel um seine Längsachse drehbar ausgeführt, wobei seine Drehposition elektrisch abgegriffen und zur Ansteuerung des Automatikgetriebes verwendet wird.

Die nicht vor veröffentlichte EP0978671A1 betrifft ein Gangwahlhebel mit integrierter Betätigungsvorrichtung für eine Handbremse, wobei die Betätigungsvorrichtung derart ausgestaltet ist, daß elektrische Signale erzeugbar sind, mit denen die Wirkung der Handbremse steuerbar ist.

Allen genannten Lösungen ist gemeinsam, daß die Betätigung der Handbremse mechanisch erfolgt. Der Fahrer des Kraftfahrzeuges muß durch eine Betätigung des Gangwahlhebels die Kraft aufbringen, die letztendlich die Handbremse festlegt oder löst. Deshalb sind diese Anordnungen engen konstruktiven Bedingungen unterworfen, denn der Gangwahlhebel muß erstens einen ausreichenden Bewegungsspielraum haben, zweitens muß dieser Bewegungsspielraum ergonomisch günstig liegen, damit der Fahrer die notwendige Kraft aufbringen kann, und drittens muß sich die Kraft möglichst einfach und ohne Reibungsverluste zur Handbremse übertragen lassen. Nachteilig bei diesen Systemen ist ferner, daß keine Sicherungen gegen unbeabsichtigtes Betätigen - insbesondere Lösen - der Handbremse bestehen.

Der vorliegenden Erfindung liegt demgegenüber das Problem zugrunde, die Bedienung von Gangschaltung und Handbremse weiter zu vereinfachen und insbesondere sicherer zu gestalten.

Diese Aufgabe wird durch die Gegenstände der Ansprüche 1 und 2 gelöst, wobei bei dem Gangwahlhebel mit integrierter Betätigungsvorrichtung für eine Handbremse die Betätigungsvorrichtung derart ausgestaltet ist, daß elektrische Signale erzeugbar sind, mit denen die Wirkung der Handbremse steuerbar ist.

Gemäß einem ersten Lösungsaspekt der Erfindung enthält die Betätigungsvorrichtung ein Freigabeelement, wobei die Betätigungsvorrichtung nur dann den Zustand der Handbremse verändernde elektrische Signale abgibt, wenn das Freigabeelement betätigt wird. Der Fahrer muß also zu gleicher Zeit die eigentliche Betätigungsvorrichtung und das Freigabeelement betätigen, was durch eine entsprechende ergonomisch günstige Anordnung dieser beiden Elemente mit einer Hand geschehen kann. Z.B. kann das Freigabeelement als Knopf ausgebildet sein, der gedrückt werden muß, um die Betätigungsvorrichtung freizugeben. Das Freigabeelement verhindert, daß die Betätigungsvorrichtung versehentlich ausgelöst wird, was durch ungewolltes Bremsen bzw. Lösen der Bremse zu schwerwiegenden Unfällen führen könnte.

Entsprechend einem zweiten Lösungsaspekt der Erfindung ist im Signalweg zwischen Betätigungsvorrichtung und Handbremse eine Überwachungsschaltung angeordnet, welche die Weitergabe der elektrischen Signale der Betätigungsvorrichtung in Abhängigkeit vom Fahrzustand überwacht und gegebenenfalls korrigiert. Vorzugsweise findet dabei eine Regelung in Abhängigkeit von der Fahrgeschwindigkeit statt. Insbesondere gehört hierzu die Begrenzung der Bremskraft auf einen von der Fahrgeschwindigkeit abhängigen Maximalwert, um ein maximales Bremsen ohne Instabilität des Fahrzeuges zu ermöglichen. Andere in die Überwachung eingehende Parameter können der Bremsenzustand (Wirkungsgrad, Temperatur etc.), das Fahrzeuggewicht, die Umgebungstemperatur, die Straßenverhältnisse, die Fahrzeugneigung usw. sein.

Vorzugsweise werden elektrische Signale, die ein Lösen der Handbremse bewirken, von der Überwachungsschaltung nur dann weitergeleitet, wenn die Fußbremse betätigt wird. Hierdurch wird verhindert, daß das Fahrzeug durch ein unbeabsichtigtes Lösen der Handbremse wegrollt, da es beim Lösen der Handbremse durch die Fußbremse gehalten wird.

Mit der Betätigungsvorrichtung muß nicht direkt und mechanisch die Handbremse festgestellt oder gelöst werden, sondern es erfolgt nur die Erzeugung elektrischer Signale, die dann an die Handbremse weitergeleitet und dort entsprechend umgesetzt werden. Die hierfür notwendigen Kräfte werden an der Handbremse vorzugsweise durch elektrische Energie erzeugt.

Die erfindungsgemäße Kopplung eines gewöhnlichen Gangwahlhebels mit der Betätigungsvorrichtung einer elektrischen Handbremse hat zunächst den Vorteil, daß die Gangschaltung im wesentlichen konstruktiv unverändert bleiben kann. Weiterhin kann die Betätigungsvorrichtung für die Handbremse dort am Gangwahlhebel angebracht werden, wo sie ergonomisch für den Fahrer am besten erreichbar und bedienbar ist. Das Hauptaugenmerk der Ergonomie kann sich dabei auf die leichte und bequeme (feinmotorische) Einstellbarkeit richten, die typischerweise mit der Hand vorgenommen wird. Anders als beim Stand der Technik muß nicht darauf geachtet werden, daß der Fahrer (grobmotorisch) eine hohe Kraft auf die Betätigungsvorrichtung ausüben können muß.

Weiterhin unterliegt die Anordnung der Betätigungsvorrichtung keinen Beschränkungen durch eine notwendige mechanische Kraftübertragung. Die Weiterleitung der elektrischen Signale kann vielmehr aus quasi jeder beliebigen Position einer Betätigungsvorrichtung heraus erfolgen, da lediglich entsprechende Leiterbahnen herzustellen sind, die die Betätigungsvorrichtung mit der Handbremse verbinden. Darüber hinaus ist es sogar im Rahmen der Erfindung denkbar, die elektrischen Signale drahtlos zur Handbremse zu übertragen. Schließlich erlauben elektrische Signale mit einfachen elektronischen Mitteln auch eine vielfältige Kontrolle und Manipulation, so daß die Funktion der Handbremse mit erhöhten Sicherheitskontrollen ausgestattet werden kann.

Vorzugsweise ist die Betätigungsvorrichtung so ausgestaltet, daß die Bremskraft mit ihr dosiert werden kann. Der Fahrer kann dann bestimmen, wie fest die Bremse angezogen werden soll. So ist z.B. bei flachem Gelände eine weniger große Bremskraft notwendig als in einer Hanglage. Zudem ermöglicht eine dosierbare Bremskraft auch das Anfahren am Berg, wobei in dem Maße Bremskraft weggenommen wird, wie der eingekuppelte Motor das Halten und Anziehen des Fahrzeuges übernimmt.

Die Dosierbarkeit der Bremskraft erfordert insbesondere eine entsprechend eingerichtete Bremse, mit der sich ein kontinuierlicher Bereich an Kräften erzeugen läßt. Zudem wird in der Regel die Betätigungsvorrichtung ein der Kraft entsprechendes analoges elektrisches Signal abgeben, z.B. eine entsprechende Spannung. Denkbar ist aber auch, daß von der Betätigungsvorrichtung die Bremskraft digital kodiert wird oder daß die Dauer eines abgegebenen (binären) Signals die Höhe der Bremskraft bestimmt.

Zur Einstellung und Steuerung einer dosierbaren Bremskraft kann die Betätigungsvorrichtung ein bewegliches Bedienungselement enthalten, durch dessen Position die Bremskraft bestimmt wird. Mögliche Bedienungselemente sind Drehknöpfe, Schieber, Hebel und dergleichen, aber auch der Gangwahlhebel selbst kann als Bedienungselement wirken. Weiterhin wirkt vorzugsweise gegen die Bewegung des Bedienungselementes eine mit wachsender Bremskraft zunehmende Gegenkraft. Diese kann mechanisch von einer Feder oder elektrisch z.B. von Magneten erzeugt werden. Eine solche Gegenkraft hat den Vorteil, daß sie ein ungewolltes plötzliches Anwählen hoher Bremskräfte verhindert und darüber hinaus dem Fahrer ein intuitives Gefühl für die Höhe der Bremskraft gibt. Von herkömmlichen Handbremsen ist es nämlich vertraut, daß die für eine Steigerung der Bremskraft aufzuwendende Kraft umso größer wird, je höher die schon wirkende Bremskraft ist. Dieses vertraute Gefühl wird durch die Gegenkraft simuliert, wobei jedoch die absolute Größe der Gegenkraft in einem Bereich liegt, der auch von körperlich schwächeren Fahrern bequem bedient werden kann. Vorzugsweise ist die Erzeugung der Gegenkraft so ausgestaltet, daß die Höhe der Gegenkraft von jedem Fahrer individuell eingestellt werden kann.

Der erfindungsgemäße Gangwahlhebel wird vorzugsweise in Verbindung mit einem Automatikgetriebe realisiert. Im Gegensatz zu einem Schaltgetriebe läßt das Automatikgetriebe größere Freiheit für die Wahl der Bewegung des Gangwahlhebels und die Zuordnung von Hebelstellung zu Getriebegang. Hierdurch kann die zusätzliche Funktion einer Betätigungsvorrichtung besser in den Gangwahlhebel integriert werden.

Nach einer besonderen Ausführungsform der Erfindung wird die Betätigungsvorrichtung durch den Gangwahlhebel und Positionserfassungsmittel gebildet, wobei die Positionserfassungsmittel elektrische Signale in Abhängigkeit von der Position des Gangwahlhebels erzeugen. Die Bewegung der Gangwahlhebels dient also nicht nur der Auswahl und dem Einlegen der Gänge, sondern - in einem bestimmten Bewegungsbereich - auch der Betätigung der Handbremse. Das Anziehen der Handbremse erfolgt somit quasi wie das Einlegen eines Ganges, wobei zwangsläufig sichergestellt ist, daß die Handbremse nur im Leerlauf angezogen werden kann. Bei einem Automatikgetriebe liegt der Bereich der Handbrems-Stellung des Gangwahlhebels vorzugsweise in Nachbarschaft zur Parkstellung ("P"), in der das Getriebe blockiert wird.

Nach einer anderen Ausgestaltung der Erfindung weist die Betätigungsvorrichtung ein am Gangwahlhebel angeordnetes bewegliches Bedienungselement auf. Vorzugsweise handelt es sich hierbei um einen Drehknopf, einen Schieber oder einen Hebel, dessen Stellung die Höhe der Bremskraft bestimmt. Ebenso sind Taster denkbar, die durch mehrfaches Drücken die Höhe der Bremskraft festlegen. Mit einem solchen Bedienungselement ist es möglich, die Handbremse unabhängig von der Gangschaltung zu betätigen. Dies ist z.B. dann zweckmäßig, wenn mit eingelegtem Gang am Berg angefahren werden soll.

Vorzugsweise verstellt das genannte Bedienungselement ein Potentiometer oder ein vergleichbares elektrisches Bauteil, so daß an dessen Ausgang auf einfache Art ein zur Stellung des Bedienungselementes proportionales elektrisches Signal zur Verfügung steht.

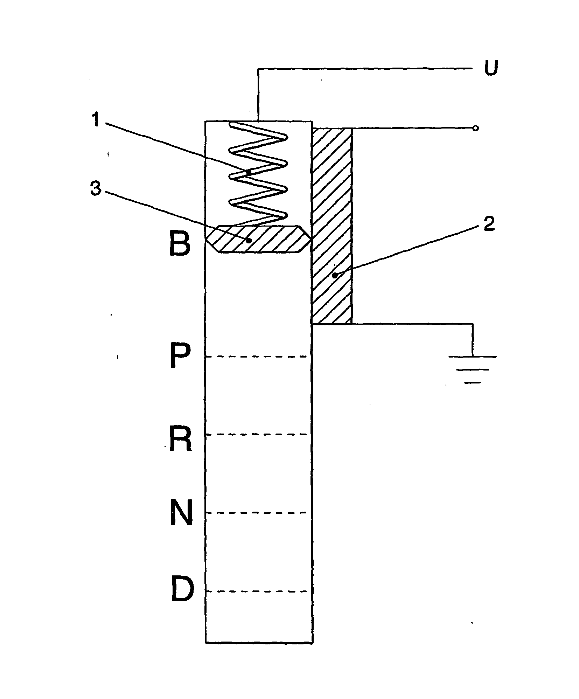

Im folgenden wird die Erfindung anhand der Figur beispielhaft erläutert.

Die Figur zeigt eine Prinzipskizze des erfindungsgemäßen Gangwahlhebels für ein Automatikgetriebe mit integrierter Betätigungsvorrichtung für eine Handbremse. Ein wichtiges Merkmal ist dabei die Zusammenführung der Wählhebelfunktion eines automatisierten Getriebes (z.B. Wählhebelstellungen P, R, N, D, Tiptronic-Funktion) mit der Betätigung einer elektrischen Handbremse über den Gangwahlhebel.

Dies geschieht bei der in der Figur dargestellten Variante durch eine weitere Gangwahlhebelstellung "B" außerhalb der bekannten Wählhebelstellungen P, R, N, D. Diese ist so angeordnet, daß der Gangwahlhebel in Raststellungen einrasten oder eine stufenlos verstellbare Wählhebelstellung einnehmen kann. Diese Position der Handbremshebelstufe liegt vor der P-Position des Gangwahlhebels.

Will der Fahrzeugführer sein Fahrzeug parken und gegen unbeabsichtigtes Wegrollen sichern, so legt er zunächst die Fahrstufe P des Gangwahlhebels ein. Dadurch wird das Getriebe blockiert. Durch weiteres Drücken des Gangwahlhebels über die P-Stellung hinaus in den Bereich "B" werden die Aktoren der elektrischen Handbremse betätigt. Dabei bedeutet weiteres Drücken des Gangwahlhebels eine größere Bremskraft. Die Bremskraft läßt sich durch Raststellungen oder durch Selbsthemmung des Gangwahlhebels dosieren und arretieren. Die Entriegelung des Gangwahlhebels aus der Handbremshebelstellung "B" geschieht über eine geeignete elektrische Entriegelung. Die Entriegelung wird durch eine Verriegelungsschaltung mit dem Bremspedal verknüpft, so daß ein unbeabsichtigtes Wegrollen des Fahrzeugs beim Lösen der elektrischen Handbremse vermieden wird.

In der Figur ist ferner durch eine Feder 1 symbolisch angedeutet, daß ein Verschieben des Gangwahlhebels in die Bremsposition gegen eine zunehmende Gegenkraft erfolgt. Diese verhindert ein ungewolltes "Hineinschießen" in den Bremsbereich "B" und gibt dem Fahrer in intuitives Gefühl dafür, wie stark die Bremse angezogen ist.
Weiterhin zeigt die Figur symbolisch die Erzeugung einer Ausgangsspannung U, welche von der Position des Gangwahlhebels abhängt. Die Spannung U wird durch den Spannungsabfall an einem Potentiometer 2 erzeugt, wobei der Gangwahlhebel einen Abgriff 3 enthält, der als Schleifer über das Potentiometer 2 gleitet.

In einer zweiten Variante der Erfindung (nicht dargestellt) sind zwei Elemente im Gangwahlhebel so angeordnet, daß durch Betätigung eines (Bedienungs-)elementes, welches als Potentiometer ausgeführt ist, die Aktoren der elektrischen Handbremse eine Bremskraft auf die gebremsten Räder aufbringen. Die Bedienkräfte am Bedienungselement "Handbremspoti" nehmen mit größerer Bremskraft zu. Um ein ungewolltes Auslösen der Handbremsfunktion zu verhindern, ist weiterhin ein "Freigabeelement" so angeordnet, daß es der Bediener gleichzeitig mit dem ersten Bedienungselement bedienen kann (Einhandbedienung). Zur Aufbringung der Bremskraft sind also zwei voneinander unabhängige Elemente zu betätigen (z.B. mit Innenhand und Daumen). Will der Bediener die Feststellbremse betätigen, gibt er durch Betätigen des Freigabeelementes die Funktion der elektrischen Handbremse frei. Betätigt er gleichzeitig das Handbremspoti, werden die Aktoren der elektrischen Handbremse je nach Betätigungsweg des Handbremspotis mit Spannung versorgt und üben eine proportionale Kraft auf die Bremsscheiben aus. Die Festlegung der Bremskraft erfolgt durch das Loslassen des Freigabeelements. Die Auslösung der Handbremsfunktion über das Freigabeelement und das Handbremspoti kann in allen Wählhebelstellungen erfolgen.

Das Lösen der betätigten Handbremse geschieht durch Drücken des Freigabeelements. Das Einlesen des Bedienungselementes und des Freigabeelements, die Steuerung und Überwachung der Funktionen übernimmt eine geeignete elektronische Steuereinheit. Durch Überwachung der Fahrzeuggeschwindigkeit im Steuergerät kann eine maximale Bremskraft vorgegeben werden, die das Fahrzeug abbremst, aber nicht durch zu starkes Abbremsen der Räder instabil macht. Durch die Entkopplung der Handbremsfunktion von der Wählhebelstellung ist auch ein Anfahren am Berg möglich.

## Patentansprüche

1. Gangwahlhebel mit integrierter Betätigungsvorrichtung für eine Handbremse, wobei die Betätigungsvorrichtung derart ausgestaltet ist, dass elektrische Signale erzeugbar sind, mit denen die Wirkung der Handbremse steuerbar ist, und wobei die Betätigungsvorrichtung ein derartiges Freigabeelement enthält, dass die Betätigungsvorrichtung nur dann den Zustand der Handbremse verändernde elektrische Signale abgibt, wenn das Freigabeelement betätigt wird.

2. Gangwahlhebel mit integrierter Betätigungsvorrichtung für eine Handbremse, wobei die Betätigungsvorrichtung derart ausgestaltet ist, dass elektrische Signale erzeugbar sind, mit denen die Wirkung der Handbremse steuerbar ist, und wobei in dem Signalweg zwischen Betätigungsvorrichtung und Handbremse eine Überwachungsschaltung angeordnet ist, welche die Weitergabe der elektrischen Signale der Betätigungsvorrichtung in Abhängigkeit vom Fahrzustand überwacht und gegebenenfalls korrigiert.

3. Gangwahlhebel nach Anspruch 2, wobei die Überwachungsschaltung die Weitergabe der elektrischen Signale der Betätigungsvorrichtung in Abhängigkeit von der Fahrgeschwindigkeit überwacht und gegebenenfalls korrigiert.

4. Gangwahlhebel nach Anspruch 2 oder 3, wobei elektrische Signale, die ein Lösen der Handbremse bewirken, von der Überwachungsschaltung nur dann weitergeleitet werden, wenn die Fußbremse betätigt wird.

5. Gangwahlhebel nach einem der vorhergehenden Ansprüche, wobei die Bremskraft mit der Betätigungsvorrichtung dosierbar ist.

6. Gangwahlhebel nach einem der vorhergehenden Ansprüche, wobei die Betätigungsvorrichtung ein bewegliches Bedienungselement enthält, durch dessen Position die Bremskraft bestimmt wird.

7. Gangwahlhebel nach Anspruch 6, wobei gegen die Bewegung des Bedienungselementes eine mit wachsender Bremskraft zunehmende Gegenkraft wirkt.

8. Gangwahlhebel nach einem der vorhergehenden Ansprüche, wobei der Gangwahlhebel ein Automatikgetriebe steuert.

9. Gangwahlhebel nach einem der vorhergehenden Ansprüche, wobei die Betätigungsvorrichtung durch den Gangwahlhebel und Positionserfassungsmittel gebildet wird, wobei die Positionserfassungsmittel elektrische Signale in Abhängigkeit von der Position des Gangwahlhebels erzeugen.

10. Gangwahlhebel nach einem der Ansprüche 1 bis 8, wobei die Betätigungsvorrichtung ein am Gangwahlhebel angeordnetes bewegliches Bedienungselementaufweist.

11. Gangwahlhebel nach Anspruch 10, wobei das am Gangwahlhebel angeordnete bewegliche Bedienungselement ein Drehknopf, Schieber oder Hebel ist.

12. Gangwahlhebel nach Anspruch 10 oder 11, wobei das Bedienungselement ein Potentiometer verstellt.

## Claims

1. Gear selector lever with integral handbrake actuator, **characterized in that** the actuator is designed in such a way that electrical signals can be generated, which serve to control the action of the handbrake, and that the actuator comprises a release element such that the actuator delivers electrical signals modifying the condition of the handbrake only when the release element is actuated.

2. Gear selector lever with integral handbrake actuator, **characterized in that** the actuator is designed in such a way that electrical signals can be generated, which serve to control the action of the handbrake, and that a monitoring circuit, which monitors and if necessary corrects the relaying of the electrical signals from the actuator as a function of the driving condition, is arranged in the signal path between the actuator and the handbrake.

3. Gear selector lever according to Claim 2, **characterized in that** the monitoring circuit monitors and if necessary corrects the relaying of the electrical signals from the actuator as a function of the speed of travel.

4. Gear selector lever according to Claim 2 or 3, **characterized in that** electrical signals, which cause the handbrake to be released are relayed by the monitoring circuit only when the foot brake is actuated.

5. Gear selector lever according to any one of the preceding claims, **characterized in that** the actuator serves for proportioning of the brake force.

6. Gear selector lever according to any one of the preceding claims, **characterized in that** actuator comprises a moveable operating element, the position of which determines the brake force.

7. Gear selector lever according to Claim 6, **characterized in that** an opposing force which increases as the brake force increase acts in opposition to the movement of the operating element.

8. Gear selector lever according to any one of the preceding claims, **characterized in that** the gear selector lever controls an automatic transmission.

9. Gear selector lever according to any one of the preceding claims, **characterized in that** the actuator is formed by the gear selector lever and position sensing devices, the position sensing devices generating electrical signals as a function of the position of the gear selector lever.

10. Gear selector lever according to any one of Claims 1 to 8, **characterized in that** the actuator has a moveable operating element arranged on the gear selector lever.

11. Gear selector lever according to Claim 10, **characterized in that** the moveable operating element arranged on the gear selector lever is a rotary knob, a slide or a lever.

12. Gear selector lever according to Claim 10 or 11, **characterized in that** the operating element adjusts a potentiometer.

## Revendications

1. Levier de changement de vitesse avec un dispositif intégré d'actionnement d'un frein à main, où le dispositif d'actionnement est réalisé de manière telle qu'il est possible de générer des signaux électriques qui permettent de commander le frein à main et où le dispositif d'actionnement comprend un élément de déclenchement tel que le dispositif d'actionnement délivre uniquement des signaux électriques changeant avec la position du frein à main si l'élément de déclenchement est actionné.

2. Levier de changement de vitesse avec dispositif intégré d'actionnement d'un frein à main où le dispositif d'actionnement est réalisé de manière telle qu'il est possible de générer des signaux électriques qui permettent de commander le frein à main et où on a disposé, sur le trajet du signal entre le dispositif d'actionnement et le frein à main, un circuit de surveillance qui surveille le transfert des signaux électriques du dispositif d'actionnement en fonction de la situation de conduite et, le cas échéant, le corrige.

3. Levier de changement de vitesse selon la revendication 2, où le transfert des signaux électriques du dispositif d'actionnement est surveillé en fonction de la vitesse du véhicule et, le cas échéant, corrigé par le circuit de surveillance.

4. Levier de changement de vitesse selon la revendication 2 ou 3, où des signaux électriques qui entraînent une libération du frein à main sont uniquement transmis par le circuit de surveillance si la pédale de frein est enfoncée.

5. Levier de changement de vitesse selon l'une quelconque des revendications précédentes, où l'effort de freinage peut être dosé via le dispositif d'actionnement.

6. Levier de changement de vitesse selon l'une quelconque des revendications précédentes, où le dispositif d'actionnement comprend un élément de commande mobile dont la position détermine l'effort de freinage.

7. Levier de changement de vitesse suivant la revendication 6, où une force de réaction croissante avec l'effort de freinage agit contre le déplacement de l'élément de commande.

8. Levier de changement de vitesse selon l'une quelconque des revendications précédentes, où le levier de changement de vitesse pilote une boîte de vitesses automatique.

9. Levier de changement de vitesse selon l'une quelconque des revendications précédentes, où le dispositif d'actionnement est constitué du levier de changement de vitesse et de moyens d'acquisition de position, où les moyens d'acquisition de position génèrent des signaux électriques en fonction de la position du levier de changement de vitesse.

10. Levier de changement de vitesse selon l'une quelconque des revendications 1 à 8, où le dispositif d'actionnement présente un élément de commande mobile disposé sur le levier de changement de vitesse.

11. Levier de changement de vitesse selon la revendication 10, où l'élément de commande mobile disposé sur le levier de changement de vitesse est un bouton rotatif, une coulisse ou un levier.

12. Levier de changement de vitesse selon la revendication 10 ou 11, où l'élément de commande règle un potentiomètre.
